(19) Europäisches Patentamt
European Patent Office
Office européen des brevets

(11) **EP 3 740 674 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(21) Anmeldenummer: **19700899.8**

(22) Anmeldetag: **15.01.2019**

(51) Internationale Patentklassifikation (IPC):
***F03D 7/02*** *(2006.01)*

(52) Gemeinsame Patentklassifikation (CPC):
**F03D 7/0224; F03D 7/0276;** F05B 2260/71;
F05B 2270/20; F05B 2270/32; F05B 2270/322;
F05B 2270/328; Y02E 10/72

(86) Internationale Anmeldenummer:
**PCT/EP2019/050929**

(87) Internationale Veröffentlichungsnummer:
**WO 2019/138132 (18.07.2019 Gazette 2019/29)**

(54) **VERFAHREN ZUM STEUERN EINER WINDENERGIEANLAGE UND WINDENERGIEANLAGE**

METHOD FOR CONTROLLING A WIND TURBINE AND WIND TURBINE

PROCÉDÉ DE COMMANDE D'UNE ÉOLIENNE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2018 DE 102018100727**

(43) Veröffentlichungstag der Anmeldung:
**25.11.2020 Patentblatt 2020/48**

(73) Patentinhaber: **Wobben Properties GmbH**
**26607 Aurich (DE)**

(72) Erfinder: **MESSING, Ralf**
**26605 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
WO-A2-2011/150931     WO-A2-2011/157271
DE-A1- 102013 100 387     GB-A- 2 542 343
US-A1- 2014 193 254

EP 3 740 674 B1

**Beschreibung**

Die vorliegende Erfindung betrifft ein Verfahren zum Steuern einer Windenergieanlage und eine entsprechende Windenergieanlage.

Insbesondere betrifft die vorliegende Erfindung ein Verfahren zum Steuern einer Windenergieanlage, wobei die Windenergieanlage gemäß einem Betriebspunkt betrieben wird. Der Betriebspunkt ist wenigstens durch einen Pitchwinkel und eine Schnelllaufzahl bestimmt, wobei einer der Betriebspunkte einem maximalen Leistungsbeiwert entspricht. Die Windenergieanlage wird in einem Teillastbereich an einem Betriebspunkt betrieben, der von dem Betriebspunkt mit maximalem Leistungsbeiwert abweicht.

Der Teillastbereich ist der Betriebsbereich einer Windenergieanlage, in der der Wind insbesondere nicht stark genug weht, um eine Nennleistung der Windenergieleistung zu erreichen. Üblicherweise wird eine Windenergieanlage in einem Teillastbereich derart betrieben, dass eine Schnelllaufzahl $\lambda$, das heißt ein Verhältnis zwischen Umfangsgeschwindigkeit des Rotors und Windgeschwindigkeit, über den gesamten Teillastbereich nahezu konstant bleibt, indem die Drehzahl der Anlage flexibel eingestellt wird. Ein Pitchwinkel $\gamma$ wird im Teillastbereich im Regelfall nicht verändert.

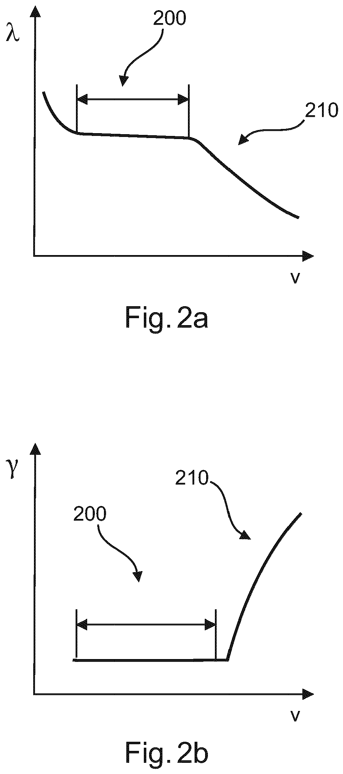

In Figuren 2a und 2b sind schematisch Verläufe der Schnelllaufzahl $\lambda$, vergl. Figur 2a, und des Pitchwinkels $\gamma$, vergl. Figur 2b, über die Windgeschwindigkeit v aufgetragen. In einem Teillastbereich 200 ist sowohl die Schnelllaufzahl $\lambda$ als auch der Pitchwinkel $\gamma$ unabhängig von der Windgeschwindigkeit v. In diesen Beispielen nimmt in einem Volllastbereich 210 die Schnelllaufzahl $\lambda$ mit steigender Windgeschwindigkeit v ab, während der Pitchwinkel $\gamma$ mit steigender Windgeschwindigkeit v ansteigt. In dem Vollastbereich 210 erreicht die Windenergieanlage dann letztendlich auch die Nennleistung. Es sollte beachtet werden, dass in den schematischen Figuren 2a und 2b keine Extremwinde, die beispielsweise zu einem Abschalten der Windenergieanlage führen, skizziert sind.

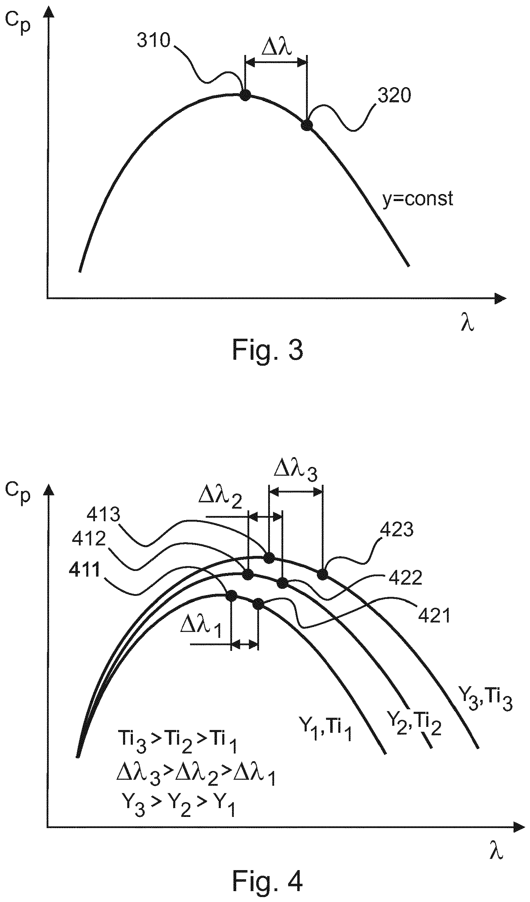

Es ist bekannt, dass für einen bestimmten Wert der Schnelllaufzahl $\lambda$ bei einem konstanten Pitchwinkel $\gamma$ ein optimaler Leistungsbeiwert $c_p$ erreichbar ist. Der Verlauf des Leistungsbeiwertes $c_p$ über die Schnelllaufzahl $\lambda$ bei konstantem Pitchwinkel $\gamma$ ist schematisch in Figur 3 gezeigt. Als Betriebspunkt der Windenergieanlage kann nun ein bestimmter Wert der Schnelllaufzahl $\lambda$ gewählt werden, wobei im Allgemeinen eine Maximierung der erreichbaren Leistung gewünscht ist. Dennoch wird im Allgemeinen nicht ein Betriebspunkt 310, bei dem der optimale Leistungsbeiwert $c_p$ erreicht wird, gewählt, sondern ein um eine Schnelllaufzahl $\Delta\lambda$ rechts, das heißt hin zu größeren Schnellaufzahlen, verschobene Betriebspunkt 320 gewählt.

Es sollte beachtet werden, dass diese Wahl des Betriebspunktes von der Rotorblattauslegung und der Betriebsweise der Anlage abhängig ist und insbesondere bei Starkwindanlage mit großen Blatttiefen möglich ist. Auch bei Schwachwindanlagen mit kleinen Blatttiefen kann der Betrieb am Betriebspunkt 320 möglich sein, wenn im Teillastbereich keine Beschränkungen hinsichtlich Lärm existieren, da bei solchen Rotorblättern der maximale Leistungsbeiwert zu höheren Schnellaufzahlen wandert und daher durch den Betrieb bei Schnelllaufzahlen rechts vom Maximum insgesamt ein höherer Lärm zu erwarten ist.

Indem der Betrieb der Anlage nicht auf dem Optimum des Leistungsbeiwertes, das heißt dem Betriebspunkt 310, stattfindet, sondern um die Schnelllaufzahl $\Delta\lambda$ rechts davon bei einer höheren Schnelllaufzahl, wird einer Turbulenz der Anströmung Rechnung getragen. Die Turbulenz bezeichnet Schwankungen der Windgeschwindigkeit um eine mittlere Windgeschwindigkeit in der Anströmung und lässt sich quantitativ als Turbulenzintensität ausdrücken. Solche Variationen der Anströmwindgeschwindigkeit auf einer Zeitskala deutlich unterhalb der Dauer einer Rotorumdrehung, werden aufgrund der Trägheit der Anlagensteuerung durch den Rotor nicht wahrgenommen, sodass die Variationen der Windgeschwindigkeit sich in einer Variation der Schnelllaufzahl niederschlägt, da sich die Drehzahl, beziehungsweise Blattspitzengeschwindigkeit in der Zeitskala der Variationen der Anströmwindgeschwindigkeit nicht ändert. Demnach sinkt die Schnelllaufzahl als Konsequenz aus einer Böe, die zu einer Anhebung der Windgeschwindigkeit führt. Bekannt ist daher, dass die Anlage rechts, das heißt bei größeren Schnelllaufzahlen, betrieben wird, sodass Böen mit daraus folgenden reduzierten Schnelllaufzahlen mit einem verbesserten Leistungsbeiwert nahe dem Optimum einhergehen. Kerngedanke ist, dass der Anströmwinkel durch die Böe nicht derart ansteigt, dass es zu einem Strömungsabriss an dem Rotorblatt kommen kann, was mit erheblich nachteiligen Folgen auf den Energieertrag einhergeht.

Das Deutsche Patent- und Markenamt hat in der Prioritätsanmeldung zu vorliegender Anmeldung folgenden Stand der Technik recherchiert: DE 10 2013 100 387 A1, GB 2 542 343 A, US 2009/0295160 A1, US 2012/0165996 A1, US 2014/0193254 A1, US 2015/0176569 A1, WO 2011 /157271 A2, WO 2017/000953 A1.

WO 2011/150931 A2 beschreibt ein Verfahren zum Betrieb einer Windturbine, wobei die Windturbine einen Rotor mit einem Satz Windturbinenblätter umfasst, wo besagter Rotor auf einem Turm montiert ist, und wobei das Verfahren folgende Schritte umfasst: Bereitstellung einer Kurve, die den optimalen Neigungswinkel als eine Funktion des Spitzengeschwindigkeitsverhältnisses der Rotorblätter der Windturbine oder als Funktion der Windgeschwindigkeit definiert, wobei der optimale Neigungswinkel der Neigungswinkel ist, der unter bestimmten Windbedingungen die höchstmögliche Abgangsleistung oder Leistungskoeffizienten CP für die Windturbine ergibt, die Änderung von nur einem Teil der besagten optimalen Neigungswinkelkurve durch Anwendung eines Sicherheitspuffers und der dadurch bewirkte Erhalt einer Sicherheitsneigungswinkelkurve, wobei der Sicherheitspuffer angewendet wird, um den Strömungsabriss am Rotorblatt zu verhindern und/oder die Überlastung eines oder mehrerer Komponenten der Windturbine, Betrieb der Windturbine gemäß der Sicherheitsneigungswinkelkurve, während des Betriebs der Windturbine, Messung eines oder mehrerer Parameter zur Erhebung von Informationen über die Windbedingungen und/oder Lasten an einer oder mehreren Komponenten der Windturbine, Justierung des Sicherheitspuffers auf der Grundlage der besagten Messungen und der dadurch bewirkte Erhalt einer justierten Neigungswinkelkurve, und Betrieb der Windturbine gemäß der justierten Neigungswinkelkurve.

Vor diesem Hintergrund bekannter Regelungsstrategien von Windenergieanlagen war es eine Aufgabe der vorliegenden Erfindung, die Leistungsausbeute im Teillastbereich weiter zu optimieren.

Gemäß einem ersten Aspekt wird die Aufgabe erfindungsgemäß bei einem Verfahren der eingangs genannten Art durch die Merkmale des Anspruchs 1 gelöst.

Indem der Abstand des Betriebspunktes zu dem Betriebspunkt mit maximalem Leistungsbeiwert nicht konstant ist, sondern in Abhängigkeit von einem Turbulenzmaß eingestellt wird, kann verhindert werden, dass unnötig viel Abstand zu dem Betriebspunkt mit maximalem Leistungsbeiwert gewählt wird. Der Abstand zwischen dem gewählten Betriebspunkt und dem Betriebspunkt mit maximalem Leistungsbeiwert kann demnach so gering wie nötig sein, um einen sicheren Betrieb der Windenergieanlage mit maximaler Leistungsausbeute zu ermöglichen. Zusätzlich handelt es sich nicht um ein lediglich irgendwie simuliertes Turbulenzmaß, sondern spiegelt dadurch, dass es gemessen wird, den tatsächlichen Zustand der Windenergieanlage wieder. Die Anpassung des Abstandes erfolgt demnach unter Berücksichtigung der tatsächlich vorherrschenden Bedingungen.

Es ist somit Kern der Erfindung, dass der Betriebspunkt im Teillastbereich, insbesondere also die Wahl der Schnelllaufzahl und des Pitchwinkels im Teillastbereich, in Abhängigkeit des gemessenen Turbulenzmaßes angepasst wird. Vorzugsweise weist die Windenergieanlage dafür ein entsprechendes Messsystem auf, das insbesondere in Echtzeit in der Lage ist, das Turbulenzmaß zu bestimmen und die Windenergieanlage dementsprechend in Echtzeit basierend auf dem gemessenen Turbulenzmaß zu regeln.

Als Turbulenzmaß wird eine Turbulenzintensität betrachtet.

Die Turbulenz des Windes lässt sich beschreiben durch die Turbulenzintensität TI:

$$TI = \frac{\sigma_u}{\overline{U}}. \qquad\qquad \text{[Gl. 1]}$$

Die Standardabweichung $\sigma_u$ ist definiert wie folgt:

$$\sigma_u = \sqrt{\frac{1}{T}\int_0^T (u - \overline{U})^2 dt}, \qquad\qquad \text{[Gl. 2]}$$

mit der über den Zeitraum $T$ gemittelten Windgeschwindigkeit $\overline{U}$:

$$\overline{U} = \frac{1}{\mathrm{T}}\int_0^{\mathrm{T}} u \, dt. \qquad\qquad \text{[Gl. 3]}$$

Um instationäre Strömungen u zu beschreiben wird üblicherweise die gemittelte Geschwindigkeit von der Fluktuation ũ überlagert:

$$u = \overline{U} + \tilde{u} \qquad\qquad \text{[Gl. 4]}$$

Die Turbulenzintensität gibt somit die Standardabweichung der Windgeschwindigkeit in Bezug auf die über einen längeren Zeitraum, beispielsweise 10 Minuten, gemittelte Windgeschwindigkeit wieder. Dadurch wird ein Maß angegeben, wie stark die überlagerte Fluktuation in Bezug auf die Windgeschwindigkeit ist. Diese Turbulenzintensität ist insoweit auch ein Maß für die Stärke der Schwankungen des Windes, die eine zusätzliche Belastung der Windenergieanlage darstellen können.

Neben der Turbulenzintensität sind natürlich auch andere messbare Turbulenzmaße alternativ oder zusätzlich anwendbar.

In einer bevorzugten Ausführungsform entspricht ein größeres gemessenes Turbulenzmaß einem größeren Abstand des Betriebspunktes zu dem Betriebpunkt mit maximalem Leistungsbeiwert.

Je größer das gemessene Turbulenzmaß, desto stärker sind beispielsweise die Auswirkungen von Böen oder ähnlichem. Entsprechend wird in dieser Ausführungsform bei einem größeren gemessenen Turbulenzmaß ein höherer Abstand, das heißt eine größere Sicherheit, vorgeschlagen. Entsprechend erfordert ein niedrigeres gemessenes Turbulenzmaß keinen derartig großen Abstand, sodass auch kleinere Böen ausreichen, die Schnelllaufzahl nahe an den Betriebspunkt mit maximalem Leistungsbeiwert heranzuführen.

In anderen Ausführungsformen kann aber auch genau umgekehrt ein größeres gemessenes Turbulenzmaß einen betragsmäßig kleineren Abstand des Betriebspunktes zu dem Betriebpunkt mit maximalem Leistungsbeiwert bedeuten. Dies bietet sich insbesondere für den Fall an, bei dem die Windenergieanlage links des Betriebspunktes mit maximalem Leistungsbeiwert, d.h. insbesondere bei kleineren Schnelllaufzahlen, betrieben wird. Hierdurch wird bei einem größeren Turbulenzmaß im Ergebnis auch eine höhere Schnelllaufzahl gewählt, mit den oben erwähnten vorteilhaften Aspekten. Dieser Betrieb findet beispielsweise bei schmalen Rotorblättern Anwendung.

Es sollte beachtet werden, dass der Abstand im Rahmen dieser Offenbarung grundsätzlich als Betrag des Abstandes zu verstehen ist. Wird eine Vorzeichenkonvention ausdrücklich verwendet, so ist ein Abstand dann als positiv zu betrachten, wenn der Betriebspunkt rechts von dem Betriebpunkt mit maximalem Leistungsbeiwert liegt. Entsprechend liegen negative Abstände dann vor, wenn der Betriebspunkt links des Maximums liegt.

Wird die Windenergieanlage in einer Ausführungsform links von dem Betriebpunkt mit maximalem Leistungsbeiwert, d.h. mit einem negativen Abstand, betrieben, so kann in dieser Ausführungsform die Erhöhung des Abstandes auch dazu führen, dass die Windenergieanlage bei einem entsprechend großen gemessenen Turbulenzmaß letztlich an dem oder sogar rechts von dem Betriebpunkt mit maximalem Leistungsbeiwert betrieben wird. Die Erfindung ist diesbezüglich nicht auf die Beispiele beschränkt und auch andere Zusammenhänge zwischen dem gewählten Abstand und dem gemessenen Turbulenzmaß sind ausdrücklich zu berücksichtigen.

Erfindungsgemäß wird der Abstand des Betriebspunktes zu dem Betriebpunkt mit maximalem Leistungsbeiwert ferner in Abhängigkeit eines Grades der Rotorblattverschmutzung eingestellt.

Es ist ferner eine Erkenntnis der vorliegenden Erfindung, dass die Lage- und Wanderung des Betriebspunktes mit maximalem Leistungsbeiwert stark vom Grad der Rotorblattverschmutzung abhängt. Demnach ist eine weitere Ertragssteigerung möglich, in dem der Grad der Rotorblattverschmutzung für die Einstellung des Abstandes berücksichtigt wird.

In einer bevorzugten Ausführungsform sind der Pitchwinkel und/oder die Schnelllaufzahl des Betriebspunktes gegenüber dem Betriebpunkt mit maximalem Leistungsbeiwert erhöht.

Demnach wird mit Verweis auf die bereits diskutierte Fig. 3 der Betriebspunkt rechts von dem Betriebpunkt mit maximalem Leistungsbeiwert eingestellt. Dies ermöglicht, dass das Auftreten einer Böe aufgrund der Trägheit des Rotors zu einer Senkung der Schnelllaufzahl und demnach zu einem Betrieb näher an dem optimalen Betriebspunkt führt, ohne dass die Gefahr eines Strömungsabrisses droht.

Ebenso ist es in anderen bevorzugten Ausführungsformen vorgesehen, den Pitchwinkel und/oder die Schnelllaufzahl des Betriebspunktes gegenüber dem Betriebpunkt mit maximalem Leistungsbeiwert zu verringern. Demnach wird die Windenergieanlage in diesen Ausführungsformen links von dem Betriebpunkt mit maximalem Leistungsbeiwert betrieben. Die Wahl wird vorzugsweise in Abhängigkeit der Rotorblattgeometrie getroffen, wobei sich der Betrieb links des Betriebspunktes mit maximalem Leistungsbeiwert insbesondere für schmale Rotorblätter als günstig gezeigt hat. Auch kann beispielsweise aufgrund von Lärmbeschränkungen und/oder allgemein bei Schwachwindanlagen ein Betrieb überhaupt nur links des Betriebspunktes mit maximalem Leistungsbeiwert möglich sein.

In einer bevorzugten Ausführungsform wird die Schnelllaufzahl über die Steuerung der Drehzahl und/oder des Drehmomentes gesteuert.

Die Schnelllaufzahl über die Steuerung der Drehzahl und/oder des Drehmoments zu steuern ist natürlich nur eine der möglichen Ausführungen, die Schnelllaufzahl zu steuern. Andere Möglichkeiten die Schnelllaufzahl zu beeinflussen sind ebenso vorteilhaft einsetzbar.

In einer bevorzugten Ausführungsform verbessert sich der Leistungsbeiwert bei Auftreffen einer Böe.

Indem sich der Leistungsbeiwert bei Auftreten einer Böe verbessert, können der momentane Ertrag und damit im Ergebnis auch der Jahresenergieertrag verbessert werden. Gleichzeitig wird dadurch, dass sich der Leistungsbeiwert verbessert und demnach näher an dem optimalen Leistungsbeiwert liegt, die Lasten auf die Windenergieanlage möglichst gering bleiben.

In einer bevorzugten Ausführungsform wird das Turbulenzmaß im Wesentlichen in Echtzeit gemessen.

Dadurch, dass das Turbulenzmaß im Wesentlichen in Echtzeit gemessen wird, ist ermöglicht, dass die Windenergieanlage auf das gemessene Turbulenzmaß regelt. Vorzugsweise sind dafür entsprechende Messsysteme wie beispielsweise das System Blade Vision, vorgesehen, obwohl auch andere Systeme, die zum Messen eines Turbulenzmaßes geeignet sind, ebenso einsetzbar sind.

In einer bevorzugten Ausführungsform werden 15-Sekunden Mittelwerte des Turbulenzmaßes im Wesentlichen in Echtzeit bereitgestellt.

15-Sekunden Mittelwerte haben sich als Erfahrungswert herausgestellt, der sowohl hochfrequente und weniger relevante Schwankungen unterdrückt, gleichzeitig aber auch eine Aussage über generelle Veränderungen der Windsituationen, beispielsweise auffrischenden Wind, unberücksichtigt lässt. Insbesondere sind 15-Sekunden Mittelwerte besonders aussagekräftig, um die Stärke von Böen zu bewerten. Genauso können allerdings natürlich auch längere oder kürzere Dauern des Turbulenzmaßes ermittelt werden.

In einer bevorzugten Ausführungsform umfasst das Verfahren weiter ein Steuern der Windenergieanlage in Abhängigkeit einer gemessenen Windscherung.

Unter einer Windscherung versteht man unterschiedliche Windrichtungen beziehungsweise Windgeschwindigkeiten an unterschiedlichen Stellen oder Bereichen insbesondere des Rotors. Besonders prominent ist eine vertikale Windscherung, die allgemein angibt, dass Wind in der Höhe stärker als in der Nähe und unter dem Einfluss des Bodens ist. Eine hohe Windscherung, d.h stark unterschiedliche Windsituationen an unterschiedlichen Positionen der Rotorblätter über den Rotorumlauf, kann zu hohen Anlagenlasten führen und birgt ferner die Gefahr, dass das Rotorblatt durch zu hohe Anstellwinkel in den Strömungsabriss gelangt. Die Windscherung kann beispielsweise anhand der über den Rotorumfang auftretenden Lasten oder aber auch durch Windsensoren, die den Wind an unterschiedlichen Bereichen der Rotorebene messen, gemessen und bestimmt werden.

In einer bevorzugten Ausführungsform wird die Windenergieanlage in Abhängigkeit der gemessenen Windscherung und des gemessenen Turbulenzmaßes unter Berücksichtigung einer Tageszeit gesteuert.

Es ist bekannt, dass Tag und Nacht einen Einfluss auf sowohl die Turbulenz als auch die Windscherung haben. Allerdings ist die Auswirkung diametral, das heißt während die Turbulenzintensität im Regelfall während des Tages größer als während der Nacht ist, so dreht sich dies bei der Scherung im Allgemeinen um. Das heißt, nachts ist eine im Allgemeinen größere Windscherung als tagsüber zu beobachten. Demnach kann die Windenergieanlage, die zusätzlich zu dem Turbulenzmaß und der Windscherung auch in Abhängigkeit der Tageszeit gesteuert wird, die vorherrschende Situation besser einordnen und demnach näher an einen Optimalwert betrieben werden.

In einer bevorzugten Ausführungsform wird das Turbulenzmaß räumlich über den Rotor aufgelöst gemessen.

In einer bevorzugten Ausführungsform wird der Betriebspunkt ferner unter Berücksichtigung akustischer Randbedingungen eingestellt.

Die Aufgabe wird erfindungsgemäß ferner durch eine Windenergieanlage gemäß Anspruch 12 gelöst.

Insbesondere ermöglicht die erfindungsgemäße Windenergieanlage somit sämtliche der Vorteile zu erreichen, die mit Verweis auf das oben beschriebene Verfahren ausgeführt wurden. Ebenso kann die Windenergieanlage gemäß diesem Aspekt mit sämtlichen der bevorzugten Ausführungsformen des erfindungsgemäßen Verfahrens kombiniert werden.

Der Turbulenzsensor kann als jede Form geeigneter Sensoren ausgebildet sein, die in der Lage sind, ein für die Turbulenz an dem Rotorblatt indikatives Maß anzugeben. Beispielsweise kann der Turbulenzsensor das Turbulenzmaß direkt anhand des gemessenen Windes oder indirekt basierend auf Durchbiegungen oder Lasten des Rotorblattes messen und bereitstellen.

Nachfolgend wird die Erfindung anhand von Ausführungsformen beispielhaft unter Bezugnahme auf die begleitenden Figuren näher erläutert.

Figur 1       zeigt eine Windenergieanlage in einer schematischen Darstellung.

Figur 2a       zeigt schematisch den Verlauf zwischen Schnelllaufzahl $\lambda$ und Windgeschwindigkeit v.

Figur 2b       zeigt schematisch den Verlauf zwischen Pitchwinkel $\gamma$ und Windgeschwindigkeit v.

Figur 3       zeigt schematisch den Verlauf zwischen Leistungsbeiwert $c_p$ und Schnelllaufzahl $\lambda$ bei konstantem Pitchwinkel $\gamma$.

Figur 4       zeigt schematisch verschiedene Leistungsbeiwertverläufe in Abhängigkeit eines Turbulenzmaßes.

Figur 5a       zeigt schematisch den Verlauf zwischen Schnelllaufzahl $\lambda$ und Windgeschwindigkeit v bei steigendem Turbulenzmaß.

Figur 5b       zeigt schematisch den Verlauf zwischen Pitchwinkel $\gamma$ und Windgeschwindigkeit v bei steigendem Turbulenzmaß.

Figur 6a       zeigt schematisch den Einfluss einer Blattverschmutzung bei niedriger Anströmturbulenz.

Figur 6b       zeigt schematisch den Einfluss einer Blattverschmutzung bei höherer Anströmturbulenz.

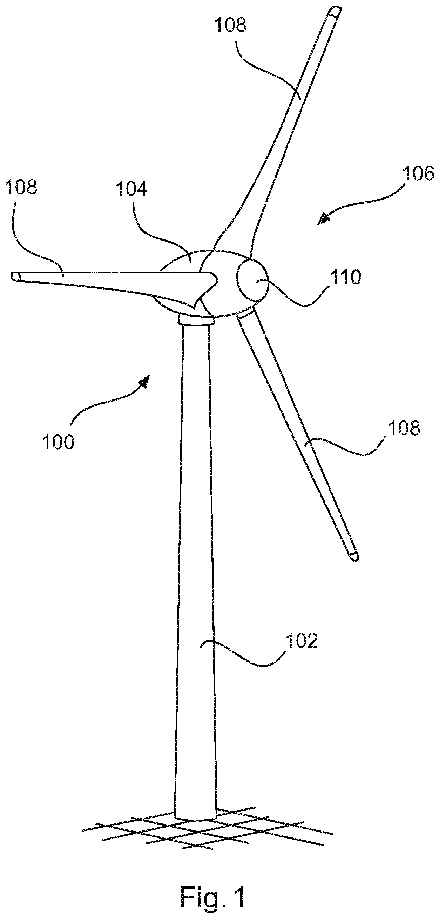

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist ein Messsystem auf, dass dazu geeignet ist, ein Maß der Anströmturbulenz in Echtzeit zu bestimmen und die Windenergieanlage 100 dementsprechend in Echtzeit nach den gemessenen Werten zu regeln.

Kern der vorliegenden Erfindung ist, wie bereits erwähnt, die Anpassung des Betriebspunktes im Teillastbereich 200, also die Wahl der Schnelllaufzahl und des Pitchwinkels im Teillastbereich 200, in Abhängigkeit der Turbulenzintensität der Anströmung. Im Folgenden wird als Turbulenzmaß die oben definierte Turbulenzintensität Ti beispielhaft beschrieben, wobei dies natürlich nur ein Beispiel darstellt und auch andere Größen, die eine Aussage über das Ausmaß der Turbulenz der Anströmung ermöglichen, ebenso vorstellbar sind.

In Fig. 4 sind für drei unterschiedliche Turbulenzintensitäten $Ti_1$, $Ti_2$ und $Ti_3$ Verläufe des Leistungsbeiwerts $c_p$ über die Schnelllaufzahl $\lambda$ gezeigt, die jeweils einer unterschiedlichen Wahl des Pitchwinkels $\gamma_1$, $\gamma_2$ und $\gamma_3$ entsprechen. Wesentlich ist aber, dass sich für jeden der Verläufe mit unterschiedlichen Turbulenzintensitäten unterschiedliche Schnelllaufzahlen $\lambda$ mit maximalem Leistungsbeiwert $c_p$ 411, 412 und 413 ergeben. Der Betriebspunkt, an dem die Windenergieanlage 100 bei den unterschiedlichen Turbulenzintensitäten $Ti_1$, $Ti_2$ und $Ti_3$ betrieben wird, ist der Betriebspunkt 421, 422 bzw. 423, die jeweils eine um eine Differenz $\Delta\lambda_1$, $\Delta\lambda_2$, $\Delta\lambda_3$ größere Schnelllaufzahl $\lambda$ als die zu dem maximalen Leistungsbeiwert gehörenden Schnelllaufzahl betrieben werden.

Kern der Erfindung ist nun genau, dass die Wahl des Abstandes beziehungsweise der Abweichung zum Betriebspunkt mit maximalem Leistungsbeiwert, in diesem Beispiel $\Delta\lambda_1$, $\Delta\lambda_2$, $\Delta\lambda_3$, in Abhängigkeit des gemessenen Turbulenzmaßes und nicht konstant ist. In diesem Beispiel ist $Ti_1 < Ti_2 < Ti_3$ und entsprechend $\Delta\lambda_1, < \Delta\lambda_2 < \Delta\lambda_3$. Anders ausgedrückt wird die Abweichung von dem Betriebspunkt mit maximalem Leistungsbeiwert je größer desto größer das gemessene Turbulenzmaß ist.

Mit Verweis auf Fig. 4 werden nachfolgend drei bei der Wahl des angepassten Betriebspunktes eine wesentliche Rolle spielende Effekte beschrieben.

Erstens soll der Abstand des Betriebspunktes zum Optimum des Leistungsbeiwertes $\Delta\lambda$ schon deshalb eine Funktion der Turbulenzintensität sein, da, wenn keinerlei Anströmturbulenz vorläge, der Betriebspunkt direkt auf dem Optimum platziert werden könnte, sprich $\Delta\lambda=0$, da dann keine Variation in der Schnelllaufzahl $\lambda$ vorliegen würde.

Zweitens ist zu berücksichtigen, dass sich das Optimum des Leistungsbeiwertes des Rotorblattes grundsätzlich unter dem Einfluss der Anströmturbulenz zu größeren Schnelllaufzahlen und Pitchwinkeln hin verschiebt. Dies ist in Fig. 4 dadurch ausgedrückt, dass sich die Punkte mit maximalem Leistungsbeiwert $c_p$ 411, 412 und 413 mit ansteigender Turbulenzintensität Ti nach rechts verschieben.

Drittens kann es bei sehr hohen Turbulenzintensitäten Ti vorkommen, dass es auch im Teillastbereich 200 zu Strömungsablösungen kommen kann, da durch die Reduzierung der Schnelllaufzahlen $\lambda$ die effektiven Anstellwinkel ansteigen. Diese Strömungsablösungen führen zu erheblichen Leistungseinbußen, die daher zu vermeiden sind. Dies geschieht wiederum erfindungsgemäß durch Anhebung des Pitchwinkels und/oder der Schnelllaufzahl.

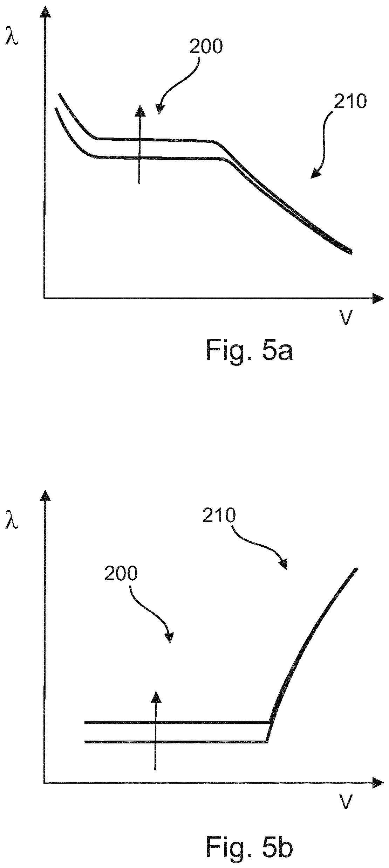

Alle die beschriebenen Effekte führen nun dazu, dass eine Anpassung der Schnelllaufzahl und des Pitchwinkels im Teillastbereich in Abhängigkeit der in Echtzeit ermittelten Turbulenzintensität der Anströmung vorzugsweise dergestalt vorgenommen wird, dass die Schnelllaufzahl $\lambda$ und/oder der Pitchwinkel $\gamma$ bei Teillast mit zunehmender Turbulenzintensität angepasst, insbesondere, wie in Fig. 5a und 5b besonders gut ersichtlich, ansteigt. Dies ist in Fig. 5a und 5b durch den nach oben gerichteten Pfeil im Teillastbereich 200 angedeutet, während im Volllastbereich 210 keine von dem bestimmten Turbulenzmaß abhängige Anpassung erfolgt.

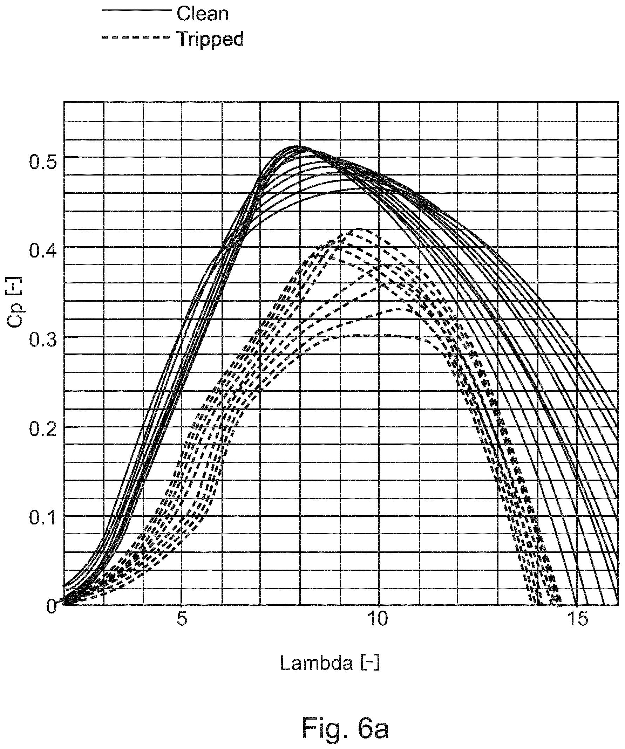

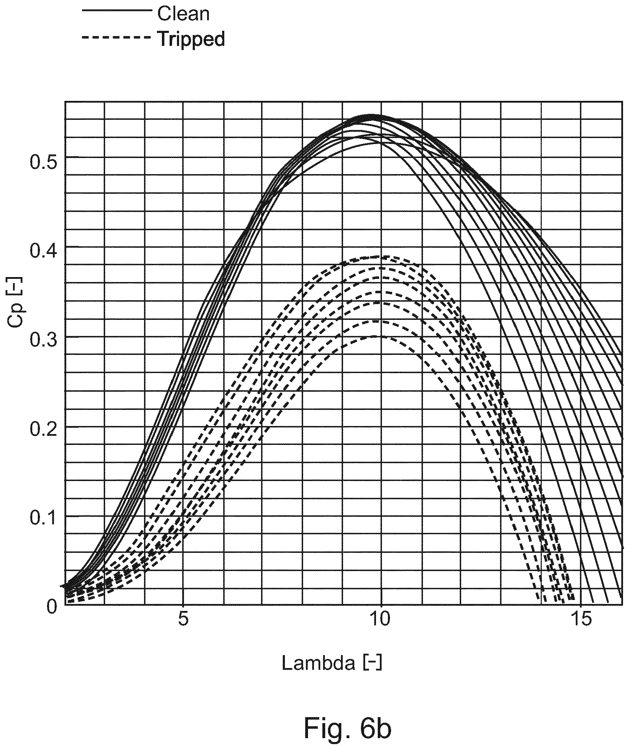

In Fig. 6a und 6b sind schematisch und exemplarisch jeweils für verschiedene Pitchwinkel die Verläufe des Leistungsbeiwertes über die Schnelllaufzahl gezeigt, wobei die Werte eines sauberen Rotorblattes mit durchgezogenen Linien und die eines verschmutzten Rotorblattes mit gestrichelten Linien dargestellt sind. In Fig. 6a sind die Verläufe für eine niedrige Turbulenzintensität gezeigt, während in Fig. 6b im Vergleich dazu die Verläufe für eine höhere Turbulenzintensität gezeigt sind.

Es kann gesehen werden, dass die maximalen Leistungsbeiwerte für verschmutzte Blätter unabhängig von der Turbulenzintensität natürlich deutlich unterhalb der Werte für nicht verschmutzte Rotorblätter liegen.

Es hat sich allerdings gezeigt, dass der Abstand der Schnelllaufzahlen, bei denen das Leistungsoptimum erreicht wird, zwischen einem sauberen und einem verschmutzten Rotorblatt von der Turbulenzintensität abhängt. Während dieser Abstand bei einer geringen Turbulenzintensität, vgl. Fig. 6a, eher groß ist, so wird er bei einer größeren Turbulenzintensität, vgl. Fig. 6b, deutlich geringer. Es hat sich ferner gezeigt, dass das Leistungsoptimum mit zunehmender Anströmturbulenz zu höheren Schnelllaufzahlen und Pitchwinkeln wandert. Vorzugsweise werden sämtliche dieser Erkenntnisse, insbesondere einschließlich der Rotorblattverschmutzung, durch die Windenergieanlage 100 zur Regelung verwendet, um einen optimalen Betrieb der Anlage zu erreichen.

## EP 3 740 674 B1

**Patentansprüche**

1. Verfahren zum Steuern einer Windenergieanlage (100), wobei

   die Windenergieanlage (100) gemäß einem Betriebspunkt betrieben wird, wobei der Betriebspunkt wenigstens durch einen Pitchwinkel ($\gamma$) und eine Schnelllaufzahl ($\lambda$) bestimmt ist,
   wobei einer der Betriebspunkte (411, 412, 413) einem maximalen Leistungsbeiwert entspricht,
   wobei die Windenergieanlage (100) in einem Teillastbereich (200) an einem Betriebspunkt (421, 422, 423) betrieben wird, der von dem Betriebspunkt (411, 412, 413) mit maximalem Leistungsbeiwert abweicht,
   wobei der Abstand ($\Delta\lambda$) des Betriebspunktes (421, 422, 423) zu dem Betriebspunkt (411, 412, 413) mit maximalem Leistungsbeiwert in Abhängigkeit von einem gemessenen Turbulenzmaß (Ti) eingestellt wird, wobei das Turbulenzmaß (Ti) eine Turbulenzintensität umfasst, **dadurch gekennzeichnet, dass** der Abstand ($\Delta\lambda$) des Betriebspunktes (421, 422, 423) zu dem Betriebspunkt (411, 412, 413) mit maximalem Leistungsbeiwert ferner in Abhängigkeit eines Grades der Rotorblattverschmutzung eingestellt wird.

2. Verfahren nach Anspruch 1, wobei ein größeres gemessenes Turbulenzmaß (Ti) einem größeren Abstand ($\Delta\lambda$) des Betriebspunktes (421, 422, 423) zu dem Betriebspunkt (411, 412, 413) mit maximalem Leistungsbeiwert entspricht.

3. Verfahren nach einem der vorstehenden Ansprüche, wobei der Pitchwinkel ($\gamma$) und/oder die Schnelllaufzahl ($\lambda$) des Betriebspunktes (421, 422, 423) gegenüber dem Betriebspunkt (411, 412, 413) mit maximalem Leistungsbeiwert erhöht sind.

4. Verfahren nach Anspruch 3, wobei die Schnelllaufzahl ($\lambda$) über die Steuerung der Drehzahl und/oder des Drehmomentes gesteuert wird.

5. Verfahren nach einem der vorstehenden Ansprüche, wobei sich der Leistungsbeiwert bei Auftreffen einer Böe verbessert.

6. Verfahren nach einem der vorstehenden Ansprüche, wobei das Turbulenzmaß im Wesentlichen in Echtzeit gemessen wird.

7. Verfahren nach Anspruch 6, wobei 15-Sekunden Mittelwerte des Turbulenzmaßes im Wesentlichen in Echtzeit bereitgestellt werden.

8. Verfahren nach einem der vorstehenden Ansprüche, das weiter ein Steuern der Windenergieanlage (100) in Abhängigkeit einer gemessenen Windscherung umfasst.

9. Verfahren nach Anspruch 8, wobei die Windenergieanlage (100) in Abhängigkeit der gemessenen Windscherung und des gemessenen Turbulenzmaßes (Ti) unter Berücksichtigung einer Tageszeit gesteuert wird.

10. Verfahren nach einem der vorstehenden Ansprüche, wobei das Turbulenzmaß (Ti) räumlich über den Rotor aufgelöst gemessen wird.

11. Verfahren nach einem der vorstehenden Ansprüche, wobei der Betriebspunkt (421, 422, 423) ferner unter Berücksichtigung akustischer Randbedingungen eingestellt wird.

12. Windenergieanlage, wobei die Windenergieanlage eine drehzahlvariable, pitchgesteuerte Windenergieanlage ist, wobei die Windenergieanlage (100) aufweist:

   - einen Turbulenzsensor zum Messen eines Turbulenzmaßes (Ti), insbesondere einer Turbulenzintensität, und
   - eine Steuerung zum Steuern der Windenergieanlage,
   wobei die Steuerung dazu eingerichtet ist, die Windenergieanlage (100) gemäß einem Betriebspunkt zu betreiben, wobei der Betriebspunkt wenigstens durch einen Pitchwinkel ($\gamma$) und eine Schnelllaufzahl ($\lambda$) bestimmt ist,
   wobei einer der Betriebspunkte (411, 412, 413) einem maximalen Leistungsbeiwert entspricht,
   wobei die Steuerung dazu eingerichtet ist, die Windenergieanlage (100) in einem Teillastbereich (200) an einem Betriebspunkt (421, 422, 423) zu betreiben, der von dem Betriebspunkt (411, 412, 413) mit maximalem Leistungsbeiwert abweicht,
   wobei die Steuerung dazu eingerichtet ist, den Abstand ($\Delta\lambda$) des Betriebspunktes (421, 422, 423) zu dem

7

Betriebspunkt (411, 412, 413) mit maximalem Leistungsbeiwert in Abhängigkeit von dem Turbulenzmaß (Ti), das von dem Turbulenzsensor gemessen wird, einzustellen, wobei das Turbulenzmaß (Ti) eine Turbulenzintensität umfasst, **dadurch gekennzeichnet, dass** die Steuerung dazu eingerichtet ist, den Abstand (Δλ) des Betriebspunktes (421, 422, 423) zu dem Betriebspunkt (411, 412, 413) mit maximalem Leistungsbeiwert ferner in Abhängigkeit eines Grades der Rotorblattverschmutzung einzustellen.

**Claims**

1. A method for controlling a wind turbine (100), wherein

   the wind turbine (100) is operated according to an operating point, wherein the operating point is determined at least by a pitch angle (γ) and a tip speed ratio (λ),
   wherein one of the operating points (411, 412, 413) corresponds to a maximum power coefficient,
   wherein, in a partial load range (200), the wind turbine (100) is operated at an operating point (421, 422, 423) which differs from the operating point (411, 412, 413) with the maximum power coefficient,
   wherein the distance (Δλ) of the operating point (421, 422, 423) from the operating point (411, 412, 413) with the maximum power coefficient is set in accordance with a measured turbulence measure (Ti), wherein the turbulence measure (Ti) comprises a turbulence intensity, **characterized in that** the distance (Δλ) of the operating point (421, 422, 423) from the operating point (411, 412, 413) with the maximum power coefficient is also set in accordance with a degree of rotor blade soiling.

2. The method as claimed in claim 1, wherein a relatively large measured turbulence measure (Ti) corresponds to a relatively large distance (Δλ) of the operating point (421, 422, 423) from the operating point (411, 412, 413) with the maximum power coefficient.

3. The method as claimed in one of the preceding claims, wherein the pitch angle (γ) and/or the tip speed ratio (λ) of the operating point (421, 422, 423) is increased with respect to the operating point (411, 412, 413) with the maximum power coefficient.

4. The method as claimed in claim 3, wherein the tip speed ratio (λ) is controlled by controlling the rotational speed and/or the torque.

5. The method as claimed in one of the preceding claims, wherein the power coefficient improves when a gust of wind occurs.

6. The method as claimed in one of the preceding claims, wherein the turbulence measure is measured essentially in real time.

7. The method as claimed in claim 6, wherein 15-second mean values of the turbulence measure are made available essentially in real time.

8. Method according to one of the preceding claims, which also comprises controlling the wind turbine (100) in accordance with a measured wind shear.

9. The method as claimed in claim 8, wherein the wind turbine (100) is controlled in accordance with the measured wind shear and the measured turbulence measure (Ti) taking into account the time of day.

10. The method as claimed in one of the preceding claims, wherein the turbulence measure (Ti) is measured with spatial resolution over the rotor.

11. The method as claimed in one of the preceding claims, wherein the operating point (421, 422, 423) is also set taking into account acoustic boundary conditions.

12. A wind turbine, wherein the wind turbine is a pitch-controlled wind turbine with a variable rotational speed, wherein the wind turbine (100) has:

    - a turbulence sensor for measuring a turbulence measure (Ti), in particular a turbulence intensity, and

- a controller for controlling the wind turbine,
wherein the controller is configured to operate the wind turbine (100) according to an operating point, wherein the operating point is determined at least by a pitch angle ($\gamma$) and a tip speed ratio ($\lambda$),
wherein one of the operating points (411, 412, 413) corresponds to a maximum power coefficient,
wherein, in a partial load range (200), the controller is configured to operate the wind turbine (100) at an operating point (421, 422, 423) which differs from the operating point (411, 412, 413) with the maximum power coefficient, wherein the controller is configured to set the distance ($\Delta\lambda$) of the operating point (421, 422, 423) from the operating point (411, 412, 413) with the maximum power coefficient in accordance with the turbulence measure (Ti) which is measured by the turbulence sensor, wherein the turbulence measure (Ti) comprises a turbulence intensity, **characterized in that** the controller is configured to also set the distance ($\Delta\lambda$) of the operating point (421, 422, 423) from the operating point (411, 412, 413) with the maximum power coefficient in accordance with a degree of rotor blade soiling.

**Revendications**

1. Procédé pour commander une éolienne (100), dans lequel

   l'éolienne (100) fonctionne conformément à un point de fonctionnement, dans lequel le point de fonctionnement est déterminé au moins par un angle de calage ($\gamma$) et une vitesse spécifique ($\lambda$),
   dans lequel un des points de fonctionnement (411, 412, 413) correspond à un coefficient de puissance maximal,
   dans lequel l'éolienne (100) fonctionne dans une plage de charge partielle (200) sur un point de fonctionnement (421, 422, 423) qui diffère du point de fonctionnement (411, 412, 413) avec un coefficient de puissance maximal,
   dans lequel l'écart ($\Delta\lambda$) du point de fonctionnement (421, 422, 423) par rapport au point de fonctionnement (411, 412, 413) avec un coefficient de puissance maximal est réglé en fonction d'une grandeur de turbulence (Ti) mesurée, dans lequel la grandeur de turbulence (Ti) comprend une intensité de turbulence, **caractérisé en ce que** l'écart ($\Delta\lambda$) du point de fonctionnement (421, 422, 423) par rapport au point de fonctionnement (411, 412, 413) avec un coefficient de puissance maximal est réglé en outre en fonction d'un degré de l'encrassement de pale de rotor.

2. Procédé selon la revendication 1, dans lequel une grandeur de turbulence (Ti) mesurée plus élevée correspond à un écart ($\Delta\lambda$) plus élevé du point de fonctionnement (421, 422, 423) par rapport au point de fonctionnement (411, 412, 413) avec un coefficient de puissance maximal.

3. Procédé selon l'une quelconque des revendications précédentes, dans lequel l'angle de calage ($\gamma$) et/ou la vitesse spécifique ($\lambda$) du point de fonctionnement (421, 422, 423) sont augmentés par rapport au point de fonctionnement (411, 412, 413) avec un coefficient de puissance maximal.

4. Procédé selon la revendication 3, dans lequel la vitesse spécifique ($\lambda$) est commandée par l'intermédiaire de la commande de la vitesse de rotation et/ou du couple.

5. Procédé selon l'une quelconque des revendications précédentes, dans lequel le coefficient de puissance s'améliore à l'apparition d'une rafale.

6. Procédé selon l'une quelconque des revendications précédentes, dans lequel la grandeur de turbulence est mesurée sensiblement en temps réel.

7. Procédé selon la revendication 6, dans lequel des moyennes de 15 secondes de la grandeur de turbulence sont fournies sensiblement en temps réel.

8. Procédé selon l'une quelconque des revendications précédentes, qui comprend en plus une commande de l'éolienne (100) en fonction d'un cisaillement du vent mesuré.

9. Procédé selon la revendication 8, dans lequel l'éolienne (100) est commandée en fonction du cisaillement du vent mesuré et de la grandeur de turbulence (Ti) mesurée avec prise en compte d'un moment de la journée.

10. Procédé selon l'une quelconque des revendications précédentes, dans lequel la grandeur de turbulence (Ti) est mesurée de manière résolue dans l'espace par l'intermédiaire du rotor.

**11.** Procédé selon l'une quelconque des revendications précédentes, dans lequel le point de fonctionnement (421, 422, 423) est réglé en outre avec prise en compte des conditions marginales acoustiques.

**12.** Eolienne, dans laquelle l'éolienne est une éolienne à calage commandé, à vitesse variable, dans laquelle l'éolienne (100) présente :

- un capteur de turbulence pour mesurer une grandeur de turbulence (Ti), en particulier une intensité de turbulence, et
- une commande pour commander l'éolienne,

dans laquelle la commande est conçue pour faire fonctionner l'éolienne (100) conformément à un point de fonctionnement, dans laquelle le point de fonctionnement est déterminé au moins par un angle de calage ($\gamma$) et une vitesse spécifique ($\lambda$),

dans laquelle un des points de fonctionnement (411, 412, 413) correspond à un coefficient de puissance maximal,

dans laquelle la commande est conçue pour faire fonctionner l'éolienne (100) dans une plage de charge partielle (200) sur un point de fonctionnement (421, 422, 423) qui diffère du point de fonctionnement (411, 412, 413) avec un coefficient de puissance maximal,

dans laquelle la commande est conçue pour régler l'écart ($\Delta\lambda$) du point de fonctionnement (421, 422, 423) par rapport au point de fonctionnement (411, 412, 413) avec un coefficient de puissance maximal en fonction de la grandeur de turbulence (Ti) qui est mesurée par le capteur de turbulence, dans laquelle la grandeur de turbulence (Ti) comprend une intensité de turbulence, **caractérisée en ce que** la commande est conçue pour régler l'écart ($\Delta\lambda$) du point de fonctionnement (421, 422, 423) par rapport au point de fonctionnement (411, 412, 413) avec un coefficient de puissance maximal en outre en fonction d'un degré de l'encrassement de pale de rotor.

108

108        104                    106

110

100

102

Fig. 1

Fig. 2a

Fig. 2b

Fig. 3

Fig. 4

Fig. 5a

Fig. 5b

Fig. 6a

Fig. 6b

EP 3 740 674 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013100387 A1
- GB 2542343 A
- US 20090295160 A1
- US 20120165996 A1
- US 20140193254 A1
- US 20150176569 A1
- WO 2011157271 A2
- WO 2017000953 A1
- WO 2011150931 A2

17